# EUROPEAN PATENT APPLICATION

(11) **EP 2 252 053 A1**
(43) Date of publication of application: **17.11.2010**
(21) Application number: 09721118.9
(22) Date of filing: 12.03.2009
(51) Int. Cl.: H04N 7/173, H04N 5/765, H04N 5/91

(54) **CONTENT TRANSMITTER, PROGRAM, TRANSMISSION CONTROL METHOD, AND CONTENT TRANSMISSION SYSTEM**

(30) Priority: 12.03.2008 JP 2008063350
(71) Applicant: Sony Corporation, Tokyo 108-0075 (JP)
(72) Inventor: HAYASHI, Morihiko, Tokyo 108-0075 (JP)
(74) Representative: Thévenet, Jean-Bruno
(86) International application number: PCT/JP2009/054737
(87) International publication number: WO 2009/113611

(57) **Abstract**

Provided is a content transmission device, including an input section in which a boundary between a parental level on content data restricted to be viewed and a parental level on content data allowed to be viewed for each of the reproducing devices, and a restriction time slot are input, a storage section in which the content data, the boundary and the restriction time slot are recorded, a transmitting section that transmits the content data to the reproduction device, a judgment section that determines whether the parental level on the content data is higher than the boundary of the reproduction device and the current time is within a restriction time slot of the reproduction device, and a control section that controls so that the content data being a determination object is not to be transmitted from the transmitting section to the reproduction device depending on the determination result.

## Description

### Technical Field

The present invention relates to a content transmission device, program, transmission control method, and content transmission system.

### Background Art

In recent years, a technology is drawing attention which configures a home network by interconnecting devices at home. As the devices at home, there are, for example, a personal computer (PC), a television (TV), a content storage device storing content data such as video and audio, a content reproduction device reproducing content data, and the like.

Further, there is a case where a parental level is set on content data so that, for example, children under 18 can be kept from viewing content data including violence or sexual portrayal. In this case, by restricting the reproduction by a content reproduction device, that is used by children, of content data on which the parental level is set, children can be protected from harmful content data.

For example, in Patent Document 1, a front monitor is attached in the front part of a vehicle, a rear monitor is attached in the rear part, and the rear monitor has a system for applying a predetermined parental level which is lower than the one for the front monitor. According to the system, since content data being set with the predetermined parental level cannot be reproduced on the rear monitor, children who generally are to sit in the rear seat can be protected from the content data. Moreover, parents who generally are to sit in the front seats can view content data being with a parental level as usual.

### Citation List

### Patent Literature

Patent Literature 1: JP 2006-197432 (A)

### Summary of Invention

### Technical Problem

However, in homes, a user of each content reproduction device is not specified, and thus, when applying the conventional system to a home network, restriction on the reproduction of content data cannot be performed appropriately. For example, since a content reproduction device in a living room is used by both parents and children, when a fixed parental level is applied for the content reproduction device in the living room, an inconvenience may occur that children view content data on which a parental level is set or that parents cannot view it.

Thus, in view of the foregoing, it is desirable to provide a content transmission device, a program, a transmission control method, and a content transmission system, which are new and improved, and which are capable of dynamically changing a parental level on content data allowed or restricted to be viewed on a reproduction device.

### Solution to Problem

According to an embodiment of the present invention in order to achieve the above-mentioned object, there is provided a content transmission device that is connected to one or more than two reproduction devices for reproducing content data, including an input section in which a boundary between a parental level on content data restricted to be viewed and a parental level on content data allowed to be viewed for each of the reproducing devices, and a restriction time slot are input, a storage section in which the boundary and the restriction time slot input in the input section are recorded, a transmitting section that transmits content data to the reproduction device, a judgment section that determines whether or not a condition is fulfilled that the parental level on the content data is higher than the boundary of the reproduction device and the current time is within the restriction time slot of the reproduction device, and a control section that controls so that when the judgment section determines that the condition is fulfilled, the content data being a determination object by the judgment section is not to be transmitted from the transmitting section to the reproduction device.

With such a configuration, when the judgment section determines that a parental level on content data is higher than the boundary of a reproduction device and the current time is within a restriction time slot of the reproduction device, the control section does not lead to transmit the content data from the transmitting section to the reproduction device. Because of this, the content transmission device cannot reproduce the content data within the restriction time slot. As such, the content transmission device can dynamically change the parental level on content data allowed or restricted to be viewed for a reproduction device, and thus, even if the user of the reproduction device is not specified, viewing of content data can be appropriately restricted for each user.

The transmitting section may transmit a content list indicating content data which is determined not to meet the condition among those recorded in the storage section by the judgment section, and the control section may lead to transmit content data selected from the content list by a user from the transmitting section to the reproducing device. With such a configuration, the transmitting section transmits a content list of the content data allowed to be reproduced on the reproducing device. Therefore, although the content list is transmitted from the transmitting section to the reproducing device, it is possible to prevent a user from viewing titles or thumbnails of the content data not allowed to be reproduced on the reproducing device.

The content transmission device further includes an authentication section that authenticates the user of the content transmission device. If the user is authenticated by the authentication section, the boundary data and the restriction time slot input in the input section may be recorded into the storage section, and if the user is not authenticated by the authentication section, the boundary data and the restriction time slot input in the input section may not be recorded into the storage section. With such a configuration, it is possible to restrict the user who can set the boundary and the restriction time slot on the reproducing device. Therefore, it is possible to suppress a case of the parental level and the restriction time slot being unjustly set.

According to another embodiment of the present invention in order to achieve the above-mentioned object, there is provided a program to cause a computer mounted to a content transmission device that is connected to one or more than two reproduction devices for reproducing content data, including an input section in which a boundary between a parental level on content data restricted to be viewed and a parental level on content data allowed to be viewed for each of the reproducing devices, and a restriction time slot are input, a storage section in which content data, and the boundary and the restriction time slot being input in the input section are recorded, and a transmitting section that transmits content data recorded in the storage section to function as a judgment section that determines whether or not a condition is fulfilled that the parental level an the content data recorded in the storage section is higher than the boundary of a reproduction device and the current time is within a restriction time slot of the reproduction device, and a control section that controls so that when the judgment section determines that the condition is fulfilled, the content data being a determination object by the judgment section is not to be transmitted from the transmitting section to the reproduction devices.

Such a program can cause computer hardware resources including, for example, a CPU, a ROM, a RAM, and the like, to execute the functions of the determination section and the control section described above. That is, it becomes possible to cause a computer using the program to function as the determining section and the control section described above.

According to another embodiment of the present invention in order to achieve the above-mentioned object, there is provided a content transmission method which performs in a content transmission device that is connected to one or more than two reproduction devices for reproducing content data, including the steps of inputting a boundary between a parental level on content data restricted to be viewed and a parental level on content data allowed to be viewed for each of the reproducing devices, and a restriction time slot, recording the boundary and the restriction time slot, being input, onto a storage medium, determining whether or not a condition is fulfilled that the parental level on the content data is higher than the boundary of a reproduction device and the current time is within a restriction time slot of the reproduction device, and controlling so that when it is determined that the condition is fulfilled, the content data being a determination object is not to be transmitted to the reproduction devices.

According to another embodiment of the present invention in order to achieve the above-mentioned object, there is provided a content transmission system which includes one or more than two reproduction devices for reproducing content data, and a content transmission device connected to the reproduction devices. To explain more specifically, the content transmission device includes an input section in which a boundary between a parental level on content data restricted to be viewed and a parental level on content data allowed to be viewed for each of the reproducing devices, and a restriction time slot are input, a storage section in which content data, and the boundary and the restriction time slot input in the input section are recorded, a transmitting section that transmits the content data recorded in the storage section, a judgment section that determines whether or not a condition is fulfilled that the parental level on the content data, which is recorded in the storage section, is higher than the boundary of a reproduction device and the current time is within the restriction time slot of the reproduction device, and a control section that controls so that when the judgment section determines that the condition is fulfilled, the content data being a determination object by the judgment section is not to be transmitted from the transmitting section to the reproduction devices.

With such a configuration, when the judgment section determines that a parental level on content data is higher than the boundary of a reproduction device and the current time is within a restriction time slot of the reproduction device, the control section does not lead to transmit the content data from the transmitting section to the reproduction device. Because of this, the content transmission device cannot reproduce the content data within the restriction time slot. As such, the content transmission system can dynamically change the parental level on content data restricted or allowed to be viewed for a reproduction device, and thus, even if the user of the reproduction device is not specified, appropriate viewing of content data by each user can be realized.

### Advantageous Effects of Invention

According to the content transmission device, the program, the transmission control method and the content transmission system of the present invention described above, the parental level for content data allowed or restricted to be viewed on the reproduction device can be dynamically changed.

### Brief Description of Drawings

[Fig. 1] FIG. 1 is an explanatory diagram showing a configuration of a home network according to a present embodiment.
[Fig. 2] FIG. 2 is an explanatory diagram showing a concrete example of a layout of a house to which the home network is applied.
[Fig. 3] FIG. 3 is a function block diagram showing a configuration of a reproduction device according to the present embodiment.
[Fig. 4] FIG. 4 is an explanatory diagram showing a concrete example of a content list screen to be displayed on a display.
[Fig. 5] FIG. 5 is a function block diagram showing a configuration of a content recording device according to the present embodiment.
[Fig. 6] FIG. 6 is an explanatory diagram showing a concrete example of a device list including device information of each reproduction device which is obtained by a parental level setting section.
[Fig. 7] FIG. 7 is an explanatory diagram showing a concrete example of a parental level display screen created by a display screen creating section.
[Fig. 8] FIG. 8 is an explanatory diagram showing a concrete example of a password input screen created by a display screen creating section.
[Fig. 9] FIG. 9 is an explanatory diagram showing a concrete example of a parental level setting screen created by the display screen creating section.
[Fig. 10] FIG. 10 is an explanatory diagram showing a concrete example of a device list after the setting of parental level.
[Fig. 11] FIG. 11 is a sequence diagram showing a flow of setting parental level.
[Fig. 12] FIG. 12 is a sequence diagram showing a flow until content data is reproduced by a reproduction device.
[Fig. 13] FIG. 13 is a flow chart showing a flow of a transmission control method executed by the content recording device.
[Fig. 14] FIG. 14 is a flow chart showing a flow until the content recording device obtains a device list.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The preferred embodiment of the present invention will be described in the order shown below.
(1) Overview of a home network according to the present embodiment
(2) Circumstance leading to the present embodiment
(3) Function of a reproduction device configuring a home network
(4) Function of a content recording device configuring a home network
(5) Operation of the home network according to the present embodiment
(6) Conclusion

### (1) Overview of a home network according to the present embodiment

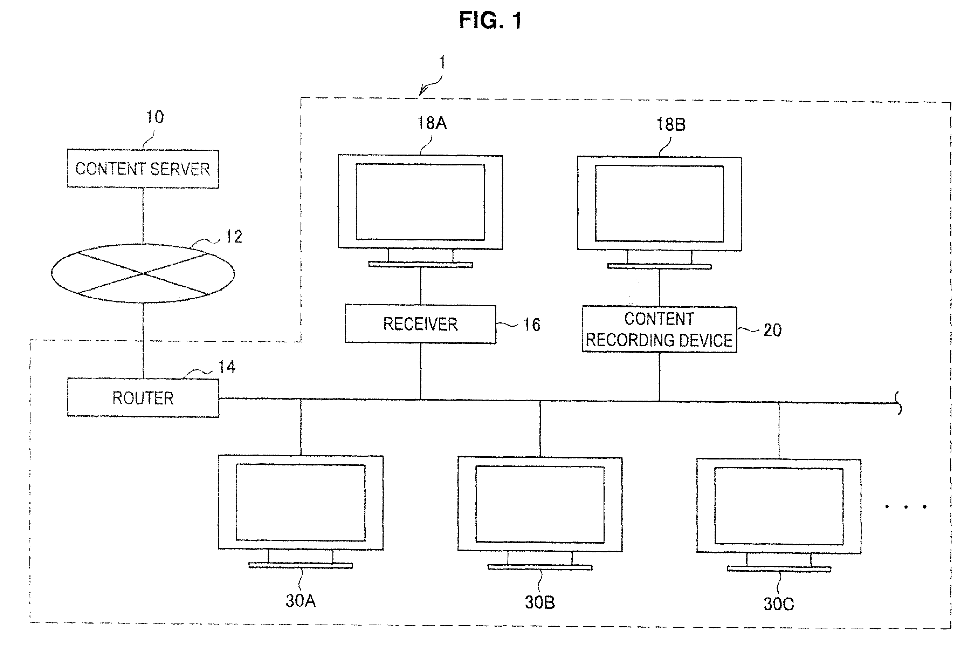

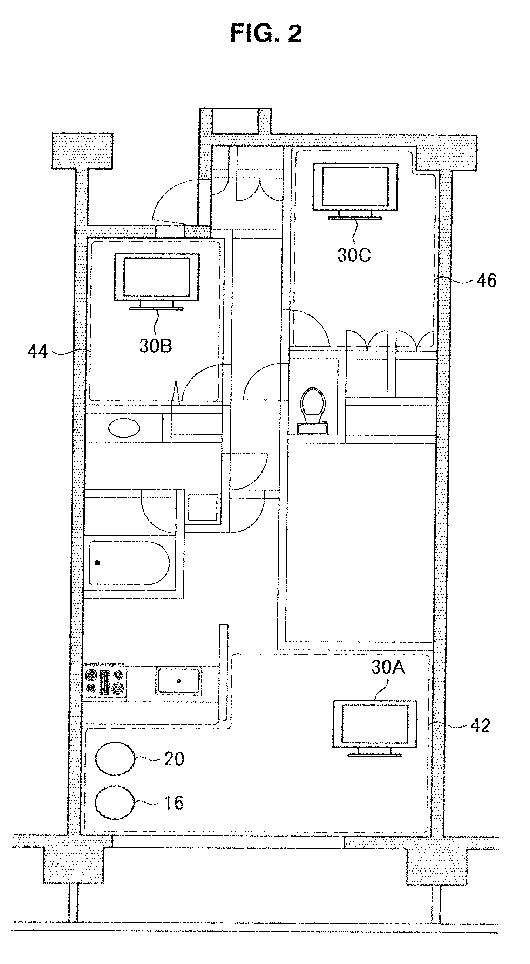

First, referring to FIGS. 1 and 2, a home network 1 according to the present embodiment will be schematically described.

FIG. 1 is an explanatory diagram showing a configuration of the home network 1 according to the present embodiment as an example of a content transmission system. As shown in FIG. 1, the home network 1 includes a router 14, a receiver 16, display devices 18A and 18B, a content recording device 20, and reproduction devices 30A to 30C. Note that, in FIG. 1, to distinguish each reproduction device, a capital letter is added to the reference numeral, such as reproduction devices 30A to 30C. However, when it is not necessary to particularly distinguish each reproduction device, they are simply collectively referred to as the reproduction device 30. Also for the display devices 18A and 18B, when it is not necessary to particularly distinguish between the display devices 18A and 18B, they are simply collectively referred to as the display device 18.

The router 14 is connected via a communication network 12 to a content server 10 which is storing content data and which is capable of delivering, transmitting or providing the content data. As the content data, there is audio data such as music, a lecture, a radio program, or the like, video image data such as a motion picture, a television program, a video program, a photograph, a document, a painting, a diagram, or the like, or any other data such as a game, software, or the like.

Further, the communication network 12 is a wired or a wireless communication path for information that is transmitted from a device connected to the communication network 12. For example, the communication network 12 may include a public network such as the Internet, telephone network, satellite network, or the like, and a leased line network such as various local area networks (LANs) including Ethernet (registered trademark), a wide area network (WAN), an Internet protocol-virtual private network (IP-VPN), or the like.

The receiver 16 receives content data by an arbitrary method. For example, the receiver 16 requests the content server 10 via the router 14 for the transmission of a content list, and receives the content list transmitted from the content server 10 in response to the request. And the receiver 16 displays the received content list on the display device 18A, and requests the content server 10 via the router 14 for transmission of content data selected by a user. Then, the content data transmitted from the content server 10 in response to the request is able to be received.

Further, the receive 16 may receive content data by arbitrary broadcast such as a terrestrial wave digital broadcast, a cable TV broadcast, a broadcasting satellite (BS) digital broadcast, a communication satellite (CS) digital broadcast, or the like. The receiver 16 transmits the content data received in such manner to the content recording device 20. Note that each device configuring the home network may be connected in a wired manner or a wireless manner.

Further, in FIG. 1, although a case is shown where the receiver 16 and the content recording device 20 are configured separately, the receiver 16 and the content recording device 20 may be configured also as a single unit. Similarly, in FIG. 1, although a case is shown where the content recording device 20 and the reproduction device 30 are configured separately, the content recording device 20 and the reproduction device 30 may configured also as a single unit. Further, in FIG. 1, although a case is shown where the receiver 16 and the reproduction device 30 are configured separately, the receiver 16 and the reproduction device 30 may be configured also as a single unit.

The content recording device 20 has a function of a content transmission device storing in a storage section 250 embedded therein content data transmitted from the receiver 16. Further, the content recording device 20 can transmit to the reproduction device 30 the requested content data. However, with the content recording device 20 according to the present embodiment, by displaying a parental level setting screen on the display device 18B, an age restriction and valid time for each reproduction device 30 are set by the user. The content recording device 20 judges whether or not to transmit content data to each reproduction device 30 based on the age restriction (parental control) and valid time (restriction time slot) applied to each reproduction device 30. The details of such content recording device 20 will be described later in "(4) Function of a content recording device configuring a home network."

The reproduction device 30 has a function of a content reproduction device obtaining content data from the content recording device 20 and reproducing the same. In FIG. 1, a monitor is shown as an example of the reproduction device 30. However, the reproduction device 30 may be an information processing device such as a personal computer (PC), a home video processing device (a DVD recorder, a video cassette recorder, or the like), a mobile telephone, a Personal Handyphone System (PHS), a portable audio playback device, a portable video processing device, a personal digital assistants (PDA), a home game machine, a portable game machine, a home appliance, or the like. The details of the function of the reproduction device 30 will be described later in "(3) Function of a reproduction device configuring a home network."

Next, a concrete example of a house to which the home network 1 described above is applied is described with reference to FIG. 2.

FIG. 2 is an explanatory diagram showing a layout of a house to which the home network 1 is applied. As shown in FIG. 2, the house has a living room 42, a children's room 44, and a parents' bedroom 46.

The receiver 16, the content recording device 20, and the reproduction device 30A are placed in the living room 42. Also, the reproduction device 30B is placed in the children's room 44, and the reproduction device 30C is placed in the bedroom 46.

As shown in FIG. 2, even if each reproduction device 30 exists in a different room, with the home network 1, content data stored in the content recording device 20 can be shared and reproduced by each reproduction device 30.

### (2) Circumstance leading to the present embodiment

Heretofore, with reference to FIGS. 1 and 2, the home network 1 according to the present embodiment has been schematically described. Next, the circumstance that has led to the present embodiment will be described.

When violence or sexual portrayal is included in content data, age restriction is set so that the content data is kept from being viewed by, for example, children under 18. As the age restriction, there is R (Restricted) 15 restricting viewing by children under 15, R18 restricting viewing by children under 18, and the like. R15 takes the age of 15 as the upper limit of the age restriction, and R18 takes the age of 18 as the upper limit of the age restriction. Accordingly, by setting age restriction for a content reproduction device used by children and keeping content data on which age restriction is set from being transmitted to the content reproduction device on which age restriction is set, children can be protected from inappropriate content data.

However, a living room, for example, in a house is a place where a family gathers, and a content reproduction device placed in the living room may be used by both children and parents. If a fixed age restriction is set for such content reproduction device that may be used by non-specified users, it becomes hard to appropriately control the restriction of viewing of content data.

For example, when R18 is constantly set on the content reproduction device placed in the living room, children can be prevented from viewing R20 content data, but parents who can by right view R20 content data are also prevented from viewing R20 content data. Further, if age restriction is not set for the content reproduction device placed in the living room, although parents are not unjustly prevented from viewing content data, children cannot be protected from content data on which age restriction is set.

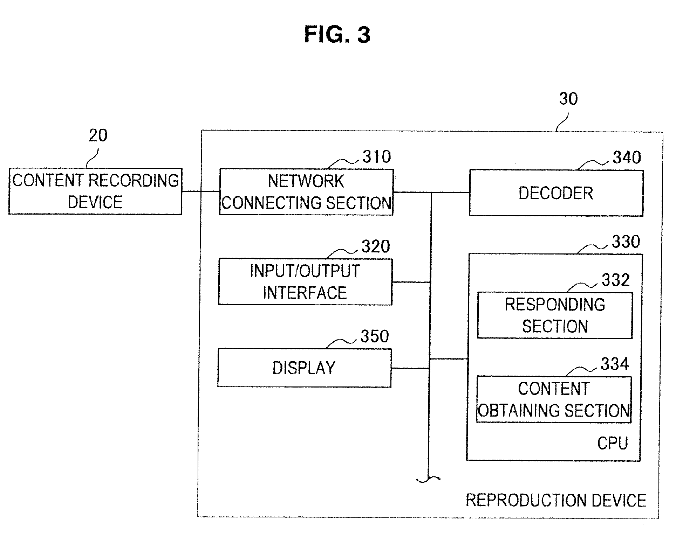

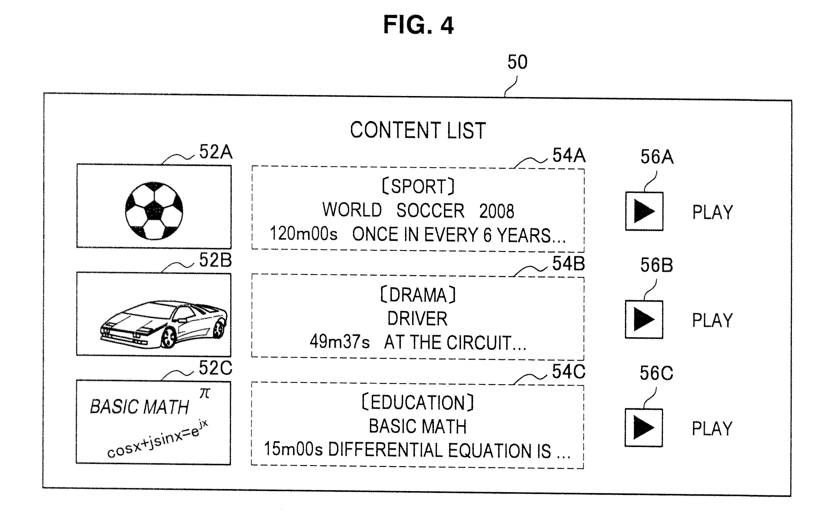

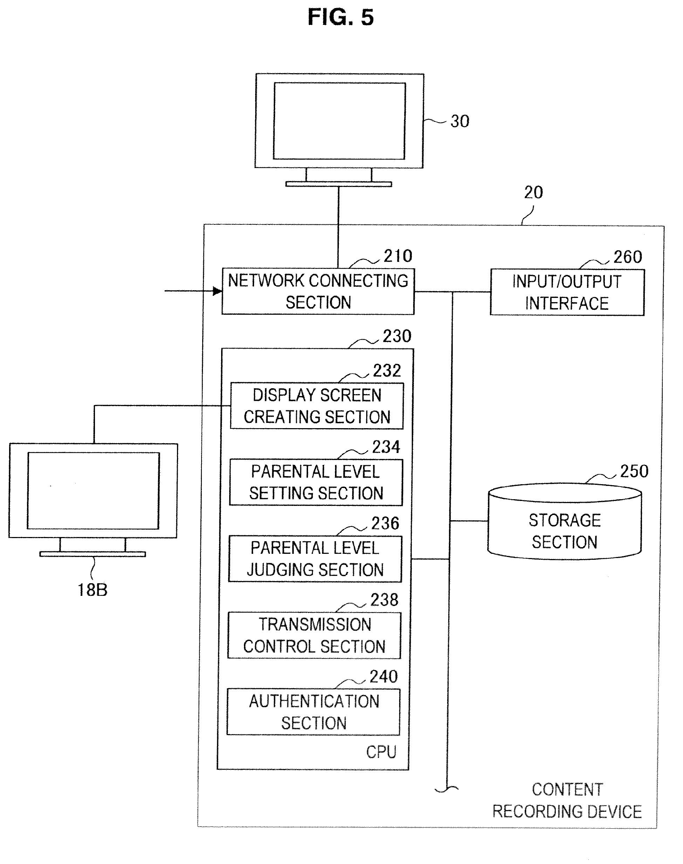

Thus, by focusing on the circumstance as described above, the content recording device 20 according to the present embodiment has been achieved. According to the content recording device 20 according to the present embodiment, age restriction allowing or restricting viewing can be dynamically changed for each reproduction device 30. Hereunder, after describing the function of the reproduction device 30 with reference to FIGS. 3 and 4, the function of the content recording device 20 will be described in detail with reference to FIGS. 5 to 10.

### (3) Function of a reproduction device configuring a home network

FIG. 3 is a function block diagram showing a configuration of the reproduction device 30 according to the present embodiment. As shown in FIG. 3, the reproduction device 30 includes a network connecting section 310, an input/output interface 320, a central processing unit (CPU) 330, a decoder 340, and a display 350.

The network connecting section 310 is a wired or a wireless interface to other devices included in the home network 1, and functions as a receiving section receiving various data from the other devices and a transmitting section transmitting various data to the other devices. For example, the network connecting section 310 may have the wireless communication function specified by IEEE (Institute of Electrical and Electronic Engineers) 802.11a, b, g and the like, or the MIMO (Multiple Input Multiple Output) communication function specified by IEEE 802.11n. Further, the network connecting section 310 may have a communication function compatible with the wired LAN specified by IEEE 802.3.

The input/output interface 320 is an interface to the user of the reproduction device 30. The input/output interface 320 is configured by operation means including a touch panel, a button, a switch, a lever, a dial, and a light-receiving section for infrared signals or a receiving section for radio signals generated by a remote controller, an input control circuit creating an operation signal in response to the operation on the operation means by the user and outputting the same to the CPU 330, and the like. The user of the reproduction device 30 can, by operating the input/output interface 320, input various data to the reproduction device 30 or issue instruction for various processes. As the various processes, there are, for example, selection of content data from a content list, reproducing/pausing/fast forwarding/rewinding/volume controlling of content data, and the like.

The CPU 330 is implemented with functions of, for example, a responding section 332, a content obtaining section 334, and the like, and controls the overall operation of the reproduction device 30. Although the drawing of such CPU 330 is omitted in FIG. 3, it may operate based on a program stored in a read only memory (ROM) with a random access memory (RAM) as the work area.

The responding section 332 responds to various requests from the devices in the home network 1. For example, when the content recording device 20 transmits a response request to grasp the reproduction device 30 existing in the home network 1, the responding section 332 responds via the network connecting section 310 to show that the device to which it belongs exists in the home network 1.

The content obtaining section 334 performs a series of processes for obtaining content data from the content recording device 20. For example, the content obtaining section 334 requests the content recording device 20 for transmission of a content list showing a list of content data that can be obtained at the time. And when the content list transmitted from the content recording device 20 is received, the content obtaining section 334 requests the content recording device 20 for transmission of content data selected from the content list by the user via the input/output interface 320. Then, the reproduction device 30 can obtain the content data transmitted from the content recording device 20 in response to the request from the content obtaining section 334.

The decoder 340 decodes the content data transmitted from the content recording device 20. And the display 350 displays the content data decoded by the decoder 340. As formats of content data to be decoded by the decoder 340, there are, for example, an image compression format such as Joint Photographic coding Experts Group (JPEG), Moving Picture Experts Group (MPEG) 1, MPEG 2, MPEG 4, or the like, an audio compression format such as MPEG1 Audio Layer-3 (MP3), Advanced Audio Coding (AAC), Linear PCM (LPCM), Windows (registered trademark) Media Audio 9 (WMA9), Adaptive Transform Acoustic Coding (ATRAC), ATRAC3, or the like. Further, as shown in FIG. 4, the display 350 also displays a content list screen 50 showing the above-described content list.

FIG. 4 is an explanatory diagram showing a concrete example of the content list screen 50 to be displayed on the display 350. As shown in FIG. 4, the content list screen 50 includes thumbnails 52A to 52C corresponding to each content data, brief information 54A to 54C, and Play buttons 56A to 56C.

The user of the reproduction device 30 can select, for example, the Play button 56A for content data whose title is "World Soccer 2008" via the input/output interface 320 on the content list screen 50 shown in FIG. 4. When the Play button 56A is selected by the user of the reproduction device 30, the content obtaining section 334 requests the content recording device 20 for transmission of the content data whose title is "World Soccer 2008." Then, the decoder 340 decodes the content data whose title is "World Soccer 2008" transmitted from the content recording device 20, and the display 350 displays the content data decoded by the decoder 340. Note that the display 350 may include the function of an audio output section such as a speaker, earphones or the like outputting audio.

### (4) Function of a content recording device configuring a home network

Heretofore, the function of the reproduction device 30 according to the present embodiment has been described with reference to FIGS. 3 and 4. Next, with reference to FIGS. 5 to 10, a function of the content recording device 20 according to the present embodiment will be described.

FIG. 5 is a function block diagram showing a configuration of the content recording device 20 according to the present embodiment. As shown in FIG. 5, the content recording device 20 includes a network connecting section 210, a CPU 230, a storage section 250, and an input/output interface 260.

The network connecting section 210 is a wired or a wireless interface to other devices included in the home network 1, and functions as a receiving section receiving various data from the other devices and a transmitting section transmitting various data to the other devices. For example, the network connecting section 210 receives content data from the receiver 16 or transmits content data to the reproduction device 30. Further, as with the network connecting section 310 of the reproduction device 30, the network connecting section 210 may have the wireless communication function specified by IEEE 802.11a, b, g and the like, or the MIMO communication function specified by IEEE 802.11n. Further, the network connecting section 210 may have a communication function compatible with the wired LAN specified by IEEE 802.3.

The CPU 230 is implemented with functions of, for example, a display screen creating section 232, a parental level setting section 234, a parental level judging section 236, a transmission control section 238, and a authentication section 240, and controls the overall operation of the content recording device 20. Although its drawing is omitted in FIG. 5, the CPU 230 may operate based on a program stored in a ROM with a RAM as the work area.

The storage section 250 is a storage medium on which content data received from the receiver 16 by the network connecting section 210 is recorded. Further, information relating to parental level described later is also recorded on the storage section 250.

Such storage section 250 may be a storage medium such as a non-volatile memory such as an electrically erasable programmable read-only memory (EEPROM), an erasable programmable read-only memory (EPROM) or the like, a magnetic disk such as a hard disk, a circular magnetic disk or the like, an optical disk such as a compact disc recordable (CD-R), a compact disc rewritable (CD-RW), a digital versatile disc recordable (DVD-R), a digital versatile disc rewritable (DVD-RW), a dual-layer digital versatile disc recordable (DVD+R), a dual-layer digital versatile disc rewritable (DVD+RW), a digital versatile disc random access memory (DVD-RAM), a Blu-ray (registered trademark) disc recordable (BD-R), a Blu-raya disc recordable (BD-RE) or the like, or a magneto-optical (MO) disk, or the like. Note that the storage section 250 may function as a buffer for temporarily holding content data transmitted from the receiver 16 to transfer the same to the reproduction device 30.

The input/output interface 260 is an interface to the user of the content recording device 20, and has a function of an input section. The input/output interface 260 is configured by operation means including a touch panel, a button, a switch, a lever, a dial, and a light-receiving section for infrared signals or a receiving section for radio signals generated by a remote controller, an input control circuit creating an operation signal in response to the operation on the operation means by the user and outputting the same to the CPU 230, and the like. The user of the content recording device 20 can, by operating the input/output interface 260, input various data to the content recording device 20 or issue instruction for various processes. As the various processes, there is, for example, a setting process of parental level.

Next, the function implemented on the CPU 230 will be described in detail.

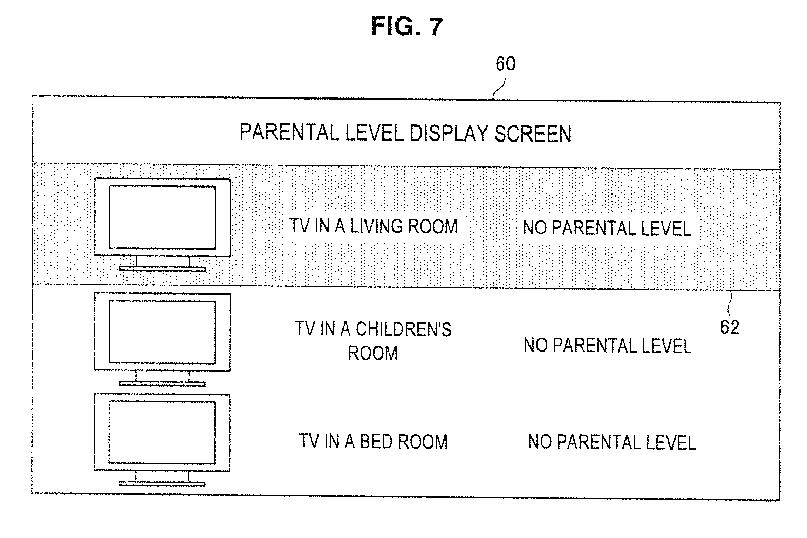

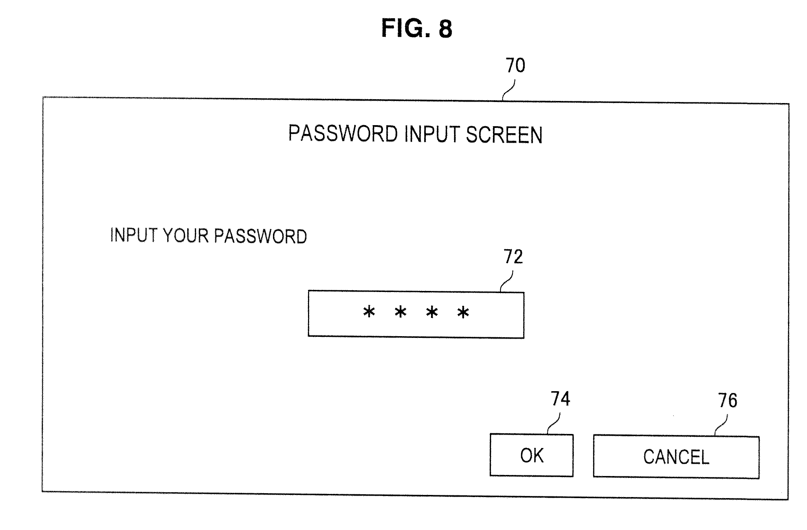

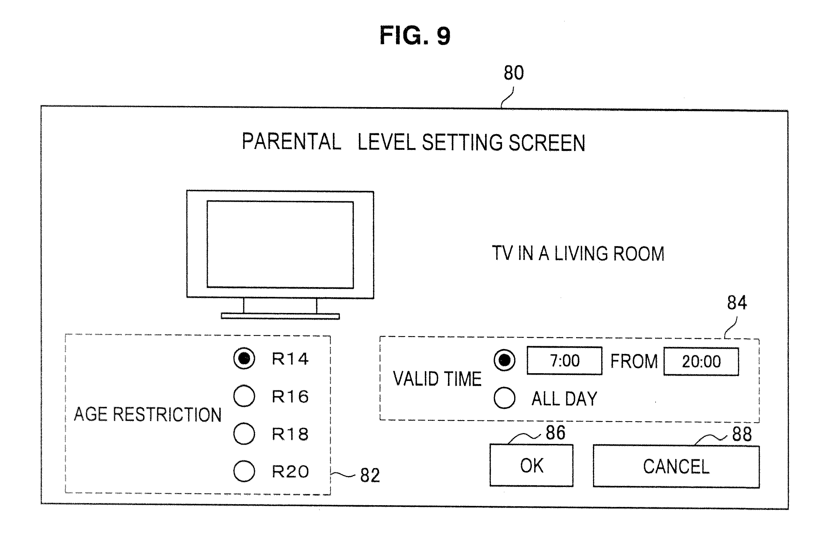

The display screen creating section 232 creates, in response to the operation on the input/output interface 260 by the user, a parental level display screen 60 shown in FIG. 7, a password input screen 70 shown in FIG. 8, a parental level setting screen 80 shown in FIGS. 9, and the like.

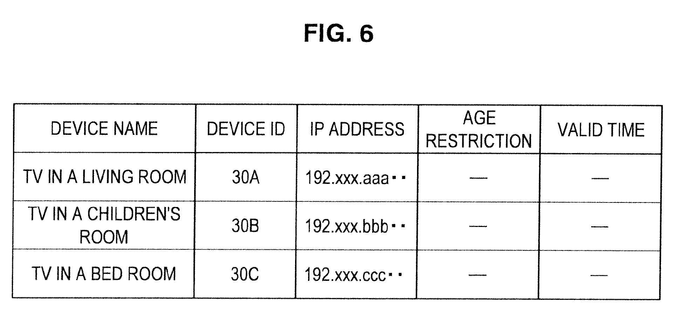

When a set request for a parental level is input to the input/output interface 260 by the user, the parental level setting section 234 performs a series of processes for setting the age restriction and the valid time to each reproduction device 30. To be more precise, first, the parental level setting section 234 obtains device information of each reproduction device 30 shown in FIG. 6.

FIG. 6 is an explanatory diagram showing a concrete example of a device list including the device information of each reproduction device 30 which is obtained by the parental level setting section 234. As shown in FIG. 6, the device information includes a device name, a device ID, an IP address, an age restriction, and a valid time. Further, in the specification, for the sake of convenience of description, description will be made assuming that a device ID and a reference numeral correspond to each other. For example, the device ID of the reproduction device 30A is assumed to be 30A.

Accordingly, FIG. 6 shows that the device name of the reproduction device 30A is "TV in living room", the device ID is "30A", the IP address is "192.xxx.aaa...", and that the age restriction and the valid time are not set. Similarly, in FIG. 6, the device information of the reproduction devices 30B and 30C are shown.

When the device information of each reproduction devices 30 is obtained by the parental level setting section 234, the display screen creating section 232 creates the parental level display screen 60 shown in FIG. 7, for example, and displays the parental level display screen 60 on the display device 18B.

FIG. 7 is an explanatory diagram showing a concrete example of the parental level display screen 60 created by the display screen creating section 232. As shown in FIG. 7, the parental level display screen 60 includes the device name, the age restriction, and the valid time set state for each reproduction device 30. In the example shown in FIG. 7, since the age restriction and the valid time are not set for each reproduction device 30 at the time, "no parental level" is described for each reproduction device 30.

When the user points, via the input/output interface 260, a cursor 62 to the reproduction device 30A (TV in living room) on such parental level display screen 60 and the reproduction device 30A is selected, the display screen creating section 232 creates the password input screen 70 shown in FIG. 8.

FIG. 8 is an explanatory diagram showing a concrete example of a password input screen 70 created by a display screen creating section 232. As shown in FIG. 8, the password input screen 70 includes a password input frame 72, an OK button 74, and a cancel button 76. The user can input a password via the input/output interface 260. Then, if the OK button 74 is selected on the password input screen 70, the authentication section 240 determines whether the password is right or wrong. Then the display screen creating section 232 creates the parental level setting screen 80 shown in FIG. 9, if the authentication section 240 confirms that the password is right and the user has a valid authority regarding to the parental level setting. Further, the display screen creating section 232 creates the parental level display screen 60 shown in FIG. 7 and displays the same on the display device 18B when the cancel button 76 is selected on the password input screen 70.

Thus, by making it possible to set or change parental level after performing password authentication, it becomes possible to restrict the user who can set the age restriction and the valid time applied to the reproduction device 30. Accordingly, it becomes possible to suppress a case of the parental level and the restriction time slot being unjustly set.

Note that FIG. 8 explains a case in which the user is authenticated by a password, however, the user authentication can be performed by an arbitrary method. For example, the authentication process may be a fingerprint authentication method requiring the user to input a fingerprint, and performing authentication based on whether or not the input fingerprint matches or is similar to the fingerprint stored in the storage section 250. Further, the authentication process may be a medium authentication method requiring the user to move an IC card closer, and performing authentication based on whether or not the IC card that is brought closer matches the IC card information stored in the storage section 250. In addition, the authentication process may be a voice authentication method using the voice of the user, a retina authentication method based on the pattern of the retina of the user, a face authentication method based on the shape of the face of the user, or the like.

FIG. 9 is an explanatory diagram showing a concrete example of the parental level setting screen 80 created by the display screen creating section 232. As shown in FIG. 9, the parental level setting screen 80 includes a age restriction selection display 82, a valid time selection display 84, an OK button 86, and a Cancel button 88.

The user can select the age restriction for the reproduction device 30A (a TV in the living room) via the input/output interface 260 in the age restriction selection display 82. Moreover, the user can select the valid time for the reproduction device 30A (the TV in the living room) via the input/output interface 260 in the valid time selection display 84.

In the example shown in FIG. 9, R14 is selected as the age restriction, and 7:00-20:00 is selected as the valid time. Then when the OK button 86 is selected in the parental level setting screen 80, the parental level setting section 234 sets the content of the age restriction and the valid time which are selected, as the parental level for the reproduction device 30.

The above-described age restriction is a boundary between the age restriction on content data allowed to be viewed and the parental level on content data restricted to be viewed on the reproduction device 30A. Accordingly, content data on which age restriction is set that is the same as or lower than the age restriction set that has been set may be allowed to be viewed on the reproduction device 30A, and content data on which age restriction is set that is higher than the age restriction set that has been set may be restricted from being viewed on the reproduction device 30A. For example, when R14 is set for age restriction, content data on which age restriction is set that is R14 or lower, such as PG12 or R14, may be allowed to be viewed on the reproduction device 30A, and content data on which age restriction is set that is higher than R14, such as R16 or R18, may be restricted from being viewed on the reproduction device 30A.

Further, content data on which age restriction (rating) is set that is lower than the age restriction set that has been set may be allowed to be viewed on the reproduction device 30A, and content data on which age restriction is set that is the same as or higher than the age restriction set that has been set may be restricted from being viewed on the reproduction device 30A. For example, when R14 is set for age restriction, content data on which age restriction is set that is lower than R14, such as PG12, may be allowed to be viewed on the reproduction device 30A, and content data on which age restriction is set that is R14 or higher, such as R14 or R18, may be restricted from being viewed on the reproduction device 30A. Note that the above-described age restriction is applied in a case where a current time is within a range of the valid time.

On the other hand, when the cancel button 88 is selected on the parental level setting screen 80, the display screen creating section 232 creates the parental level display screen 60 shown in FIG. 7 and displays the same on the display device 18B.

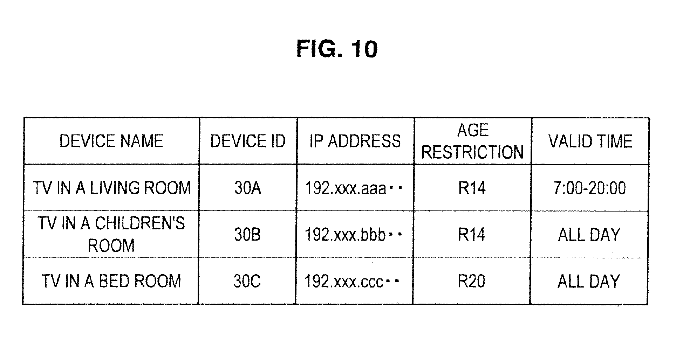

When the setting by the user via such display screen is completed, the device list of each reproduction device 30 is updated to the content shown in FIG. 10, for example.

FIG. 10 is an explanatory diagram showing a concrete example of the device list after the setting of parental level. As shown in FIG. 10, compared to the example shown in FIG. 6, the age restriction and the valid time is added to the device information of each of the reproduction device 30. Such device list is recorded in the storage section 250, and is used when there is a request from the reproduction device 30 for obtaining content data. Note that such device information including age restriction and valid time may be transmitted to each reproduction device 30 and be held by each reproduction device 30.

When requested from the reproduction device 30 for transmission of a content list, the parental level judging section (the judging section) 236 confirms the age restriction, the valid time and the current time of the reproduction device 30, and specifies the parental level to be currently applied to the reproduction device 30. Then if the parental level judging section 236 determines that the age restriction is not currently applied to the reproduction device 30, the transmission control section (the control section) 238 leads to transmit the content list that indicates a list of content data stored in the storage section 250 from the network connecting section 210 to the reproduction device 30 . Note that the content list is not necessarily the content indicating the list of the content data stored in the storage device 250, but may be a content indicating a list of specific one or more than two content data.

On the other hand, when the parental level judging section 236 determines that the age restriction can be applied to the reproduction device 30, the transmission control section 238 leads to transmit a content list of content data which is set with an age restriction lower than the age restriction applied to the reproduction device 30, from the network connecting section 210 to the reproduction device 30.

Then, when requested by the reproduction device 30 for transmission of certain content data included in the content list, the transmission control section 238 transmits the requested content data from the network connecting section 210 to the reproduction device, 30.

As described above, the reproduction device 30 changes the age restriction to be applied according to the current time. For example, during the time of 7:00 to 20:00 when children are supposed to be waken up, by applying the age restriction to the reproduction device 30A in the living room, children can be protected from the inappropriate content data. On the other hand, during the time of 20:00 to 24:00 and 0:00 to 7:00 when children are supposed to be sleeping, their parents can view the content data without any special restriction using the reproduction device 30A in the living room.

Or, if the parents stay at home, it is also possible for parents to restrict a children's usage of the reproduction device 30A in the living room. However, if the parents are out for their work during day time while only children stay at home, the parents cannot restrict the children's usage of the reproduction device 30A in the living room during day time. Therefore, in such cases, for example, by setting the time of 9:00 to 18:00 while the parents are out as a valid time, the children's usage of the reproduction device 30A in the living room during day time can be restricted. Further, after the parents come home, since the age restriction is not applied to the living room, it can prevent the parents from being unjustly restricted to view the content data.

### (5) Operation of the home network according to the present embodiment

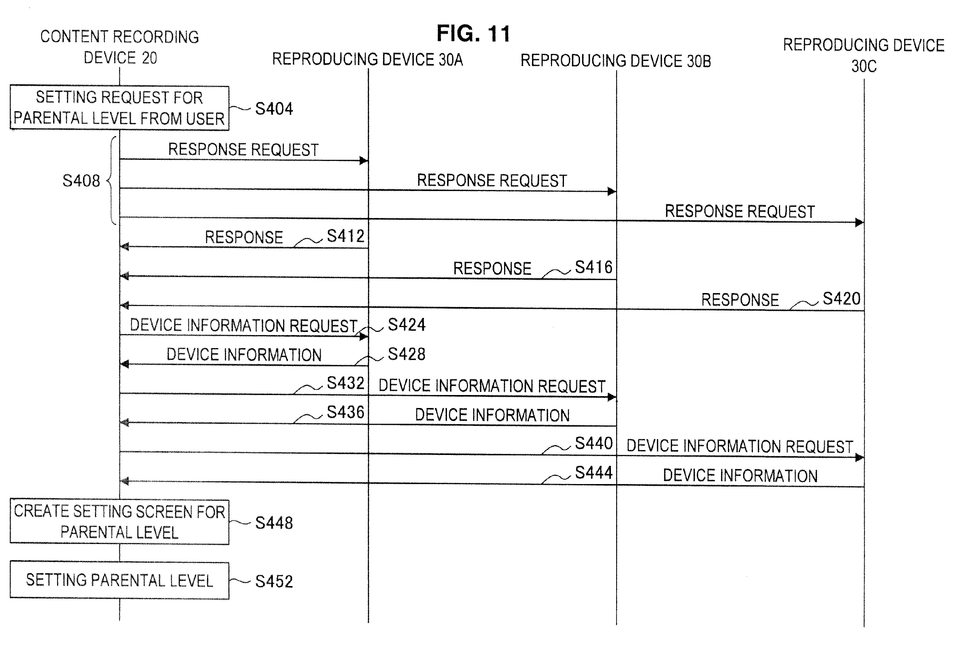

Next, an operation of the home network 1 according to the present embodiment will be described with reference to FIGS. 11 to 14.

FIG. 11 is a sequence diagram showing a flow of setting parental level. As shown in FIG. 11, first, when an instruction for setting parental level is input to the content recording device 20 by the user (S404), the content recording device 20 broadcasts a response request to the reproduction devices 30 existing in the home network 1 (S408).

When receiving the response request from the content recording device 20, the reproduction device 30A existing in the home network 1 transmits to the content recording device 20 a response including the IP address of the reproduction device 30A (S412). Further, when receiving the response request from the content recording device 20, the reproduction device 30B existing in the home network 1 transmits to the content recording device 20 a response including the IP address of the reproduction device 30B (S416). Similarly, when receiving the response request from the content recording device 20, the reproduction device 30C existing in the home network 1 transmits to the content recording device 20 a response including the IP address of the reproduction device 30C (S420). Note that, in the above, although an example is described where the content recording device 20 searches for the reproduction device 30, the present invention is not limited to such an example. For example, the reproduction device 30 may search for the content recording device 20 at the time of start-up, and the content recording device 20 may transmit the response.

Next, the content recording device 20 requests the reproduction device 30A, based on the IP address included in the response, for transmission of the device information of the reproduction device 30A (S424). When requested for transmission of the device information, the reproduction device 30A transmits to the content recording device 20 the device information including the function, the device name and the like of the reproduction device 30A (S428). Similarly, the content recording device 20 requests the reproduction device 30B, based on the IP address included in the response, for transmission of the device information of the reproduction device 30B (S432). When requested for transmission of the device information, the reproduction device 30B transmits to the content recording device 20 the device information including the function, the device name and the like of the reproduction device 30B (S436). Further, the content recording device 20 requests the reproduction device 30C, based on the IP address included in the response, for transmission of the device information of the reproduction device 30C (S440). When requested for transmission of the device information, the reproduction device 30C transmits to the content recording device 20 the device information including the function, the device name and the like of the reproduction device 30C (S444).

Then, the display screen creating section 232 of the content recording device 20 creates the parental level setting screen 80 shown in FIG. 9 based on the device information received from each reproduction device 30 or the device information recorded in the storage section 250 (S448). Then, the parental level setting section 234 sets as parental level for each reproduction device 30 the age restriction and the valid time which are selected on the parental level setting screen 80 (S452).

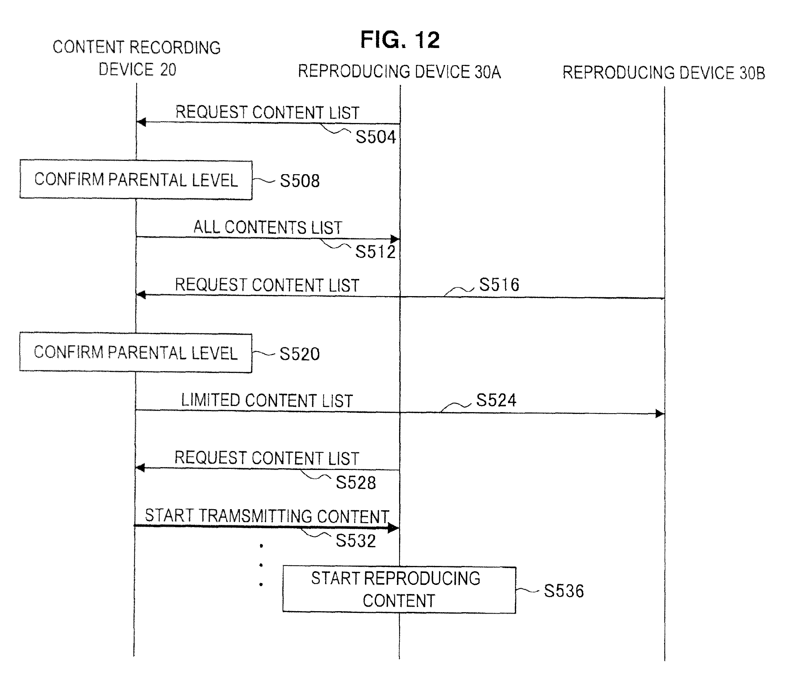

FIG. 12 is a sequence diagram showing a flow until content data is reproduced by the reproduction device 30. As shown in FIG. 12, first, when the reproduction device 30A requests the content recording device 20 for a content list (S504), the parental level judging section 236 of the content recording device 20 checks the parent level for the reproduction device 30A (S508). Then, when it is checked by the parental level judging section 236 that no age restriction is applied to the reproduction device 30A, the transmission control section 238 transmits from the network connecting section 210 to the reproduction device 30A a content list indicating all the content data (S512).

Further, when the reproduction device 30B requests the content recording device 20 for a content list (S516), the parental level judging section 236 of the content recording device 20 checks the parental level for the reproduction device 30B (S520). Here, the parental level judging section 236 confirms that the age restriction to be applied to the reproduction device 30B, the transmission control section 238 leads to transmit from the network connecting section 210 to the reproduction device 30B a limited content list indicating content data which is allowed to be viewed on the reproduction device 30B (S524).

Then, when requested by the reproduction device 30A for content data included in the content list transmitted in S512 (S528), the transmission control section 238 of the content recording device 20 starts transmitting the content data (S532). And the reproduction device 30A starts reproducing the content data being transmitted from the content recording device 20 (S536).

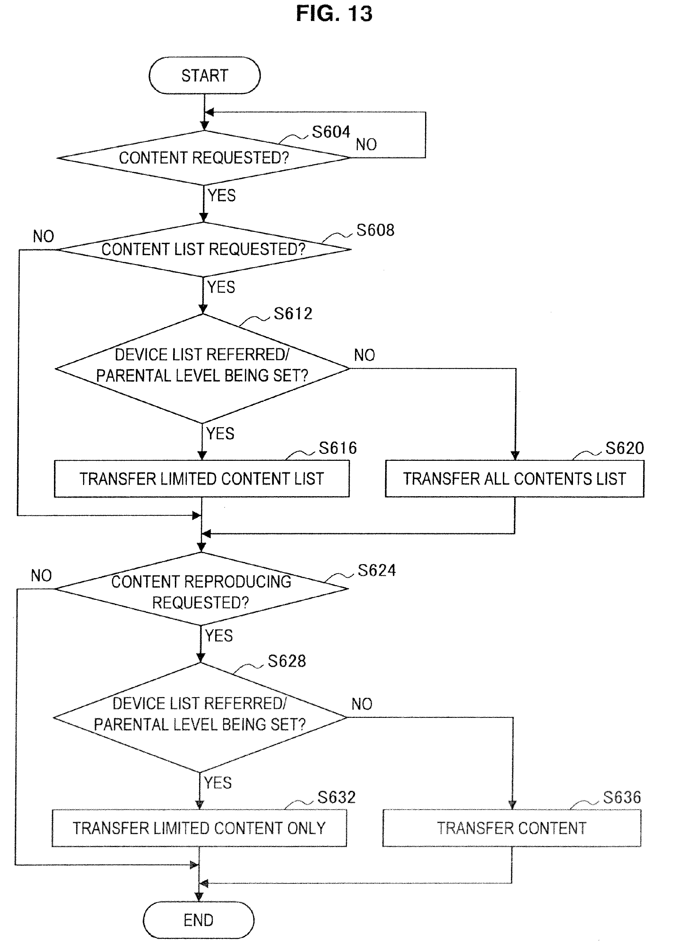

FIG. 13 is a flow chart showing a flow of a transmission control method executed by the content recording device 20. As shown in FIG. 13, when content is requested by the reproduction device 30 (S604), and a content list is requested by the reproduction device 30 (S608), the parental level judging section 236 of the content recording device 20 refers to a device list (S612). Then, when the parental level judging section 236 determines that the age restriction is to be applied to the reproduction device 30 (S616), the transmission control section 238 transmits a limited content list indicating partial content data which is allowed to be viewed on the reproduction device 30 (S616). On the other hand, when it is determined by the parental level judging section 236 that no age restriction is applied to the reproduction device 30, the transmission control section 238 transmits a content list indicating all the content data (S620).

Subsequently, when requested by the reproduction device 30 for reproduction, that is transmission, of content data (S624), the parental level judging section 236 of the content recording device 20 refers to the device list (S628). Then when the parental level judging section 236 determines that the age restriction is to be applied to the reproduction device 30, and if no age restriction has been set to the content data requested, the transmission control section 238 transmits the content data to the reproduction device 30 (S642). On the other hand, when the parental level judging section 236 determines that the age restriction is not to be applied to the reproduction device 30, the transmission control section 238 transmits the requested content data to the reproduction device 30 (S636).

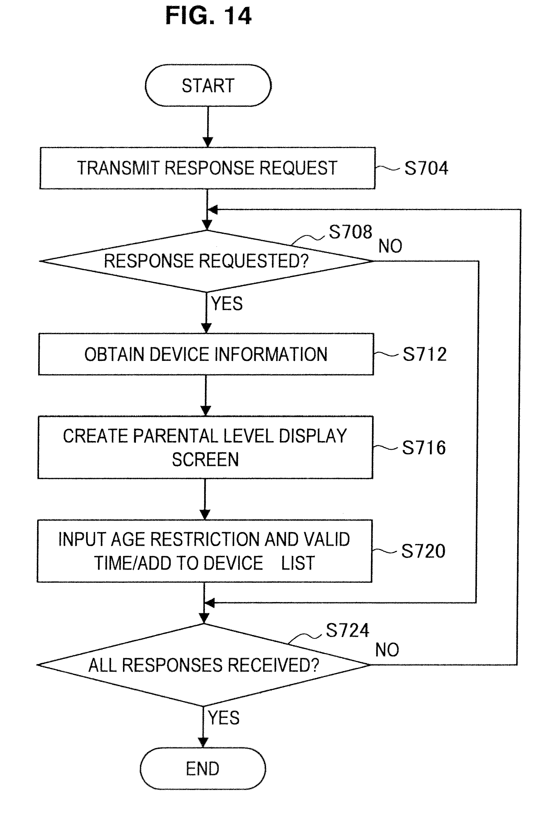

FIG. 14 is a flow chart showing a flow until the content recording device 20 obtains a device list. First, the content recording device 20 broadcasts a response request within the home network 1 (S704). Then, when there is a response to the response request (S708), the content recording device 20 obtains the device information of the reproduction device 30 which is the origin of the response (S712). Further, the display screen creating section 232 creates a parental level display screen based on the obtained device information (S716).

Further, the parental level setting section 234 adds the device information including the age restriction and the valid time input by the user to the device list (S720). Then, when all the responses to the response request transmitted in S704 are received, the content recording device 20 terminates the process (S724). Note that, in FIG. 14, although an example is described where the parental level display screen is created for each reproduction device 30, a parental level display screen which the all includes the reproduction device 30 may be created as shown in FIG. 7.

### (6) Conclusion

As described above, according to the present embodiment, when the parental level judging section 236 determines that an age restriction of a certain content data is higher than an age restriction applied to a certain reproduction device 30, and the current time is within the valid time of the reproduction device 30, the transmission control section 238 does not allow the content data to be transmitted to the reproduction device 30. For this reason, the reproduction device 30 can not reproduce the content data within the valid time for the age restriction. Thus, since the content recording device 20 can dynamically change the age restriction on the content data allowed or restricted to be viewed on a certain reproduction device 30 according to the time, even though the user of the reproduction device 30 is not specified, viewing of content data can be appropriately restricted for each user.

Moreover, the content recording device 20 according to the present embodiment transmits a content list which does not include an item indicating content data restricted to be reproduced on the reproduction device 30 to the reproduction device 30. Therefore, the content recording device 20 according to the present embodiment can prevent the user of the reproduction device 30 from acquiring information on the content data restricted to be reproduced. That is, the content recording device 20 according to the present embodiment can avoid the user of the reproduction device 30 from recognizing the existence of the content data restricted to be reproduced.

It should be understood by those skilled in the art that various modifications, combinations, sub-combinations and alterations may occur depending on design requirements and other factors insofar as they are within the scope of the appended claims or the equivalents thereof.

For example, in the above-described embodiment, an example is described where, when a parental level is not set as default for each the reproduction device 30, however, each of the reproduction device 30 may be set with a parental level as default. For example, each of the reproduction device 30 may be set with R18 as the age restriction, and may be set with all day as the valid time.

Moreover, in the above-described embodiment, a description is made with emphasis on the example of setting parental level for each reproduction device 30. However, it is also possible to change the parental level set for each reproduction device 30. When a change of the parental level is requested by the user, the parental level setting section 234 of the content recording device 20 may read out a device list from the storage section 250, and the display screen creating section 232 may create a parental level display screen based on the device list. After that, same as when wetting the parental level, the parental level is changed via the password input screen and the parental level setting screen.

Moreover, in the above-described embodiment, a description is made on the example where the password input screen is to be displayed after the parental level display screen, however, the present invention is not limited to such an example. For example, the password input screen may be displayed before the parental level display screen. With such configuration, it can prevent those other than the user with the valid authority from acquiring the current status of the parental level setting.

Further, the respective steps of the processing of the home network 1 according to this specification do not necessarily have to be performed in a temporal sequence in the order shown in the flow charts or the sequence diagrams. For example, the respective steps of the processing of the home network 1 may also be performed in parallel or individually (for example, in parallel processing or processing according to an object).

It is also possible to create a computer program that will cause the CPU 230 of the content recording device 20 to function, in cooperation with the hardware, such as the ROM, the RAM, and the like, as the display screen creating section 232, the parental level setting section 234, the parental level judging section 236, the the transmission control section 238, and the authentication section 240. A storage medium storing the computer program may also be provided. Further, a series of processes by the content recording device 20 can be implemented in hardware by configuring as hardware the display screen creating section 232, the parental level setting section 234, the parental level judging section 236, the transmission control section 238, and the authentication section 240.

## Claims

1. A content transmission device that is connected to one or more than two reproduction devices for reproducing content data, comprising:
an input section in which a boundary between a parental level on content data restricted to be viewed and a parental level on content data allowed to be viewed for each of the reproducing devices, and a restriction time slot are input;
a storage section in which the boundary and the restriction time slot input in the input section are recorded;
a transmitting section that transmits content data to the reproduction device;
a judgment section that determines whether or not a condition is fulfilled that the parental level on the content data is higher than the boundary of the reproduction device and the current time is within the restriction time slot of the reproduction device; and
a control section that controls so that when the judgment section determines that the condition is fulfilled, the content data being a determination object by the judgment section is not to be transmitted from the transmitting section to the reproduction device.

2. The content transmission device according to claim 1,
wherein the transmitting section transmits a content list indicating the content data which is determined not to meet the condition by the judgment section, and
wherein the control section leads to transmit content data selected from the content list by a user from the transmitting section to the reproducing device.

3. The content transmission device according to claim 1, further comprising an authentication section that authenticates the user of the content transmission device,
wherein if the user is authenticated by the authentication section, the boundary data and the restriction time slot input in the input section are recorded into the storage section, and
wherein if the user is not authenticated by the authentication section, the boundary data and the restriction time slot, being input, are not recorded into the storage section.

4. A program to cause a computer mounted to a content transmission device that is connected to one or more than two reproduction devices for reproducing content data, including an input section in which a boundary between a parental level on content data restricted to be viewed and a parental level on content data allowed to be viewed for each of the reproducing devices, and a restriction time slot are input, a storage section in which the boundary and the restriction time slot input in the input section are recorded, and a transmitting section that transmits content data to the reproduction devices to function as:
a judgment section that determines whether or not a condition is fulfilled that the parental level on the content data is higher than the boundary of a reproduction device and the current time is within the restriction time slot of the reproduction device; and
a control section that controls so that when the judgment section determines that the condition is fulfilled, the content data being a determination object by the judgment section is not to be transmitted from the transmitting section to the reproduction devices.

5. A transmission control method which performs in a content transmission device that is connected to one or more than two reproduction devices for reproducing content data, comprising the steps of:
inputting a boundary between a parental level on content data restricted to be viewed and a parental level on content data allowed to be viewed for each of the reproducing devices, and a restriction time slot;
recording the boundary and the restriction time slot, being input, onto a storage medium;
determining whether or not a condition is fulfilled that the parental level on the content data is higher than the boundary of a reproduction device and the current time is within a restriction time slot of the reproduction device; and
controlling so that when it is determined that the condition is fulfilled, the content data being a determination object is not to be transmitted to the reproduction devices.

6. A content transmission device which includes one or more than two reproduction devices for reproducing content data, and a content transmission device connected to the reproduction devices, comprising:
an input section in which a boundary between a parental level on content data restricted to be viewed and a parental level on content data allowed to be viewed for each of the reproducing devices, and a restriction time slot are input;
a storage section in which the boundary and the restriction time slot input in the input section are recorded;
a transmitting section that transmits the content data to the reproduction devices;
a judgment section that determines whether or not a condition is fulfilled that the parental level on the content data, which is recorded in the storage section, is higher than the boundary of a reproduction device and the current time is within a restriction time slot of the reproduction device; and
a control section that controls so that when the judgment section determines that the condition is fulfilled, the content data being a determination object by the judgment section is not to be transmitted from the transmitting section to the reproduction devices.
